# EUROPEAN PATENT APPLICATION

(11) **EP 4 261 963 A1**
(43) Date of publication of application: **18.10.2023**
(21) Application number: 20965838.4
(22) Date of filing: 14.12.2020
(51) Int. Cl.: H01M 10/04, H01M 50/147, H01M 50/463

(54) **BATTERY**

(71) Applicant: KABUSHIKI KAISHA TOSHIBA, Minato-ku Tokyo 105-0023 (JP)
(72) Inventor: YAMAMOTO, Kuniaki, Tokyo 105-0023 (JP); TERAGUCHI, Kazuhiro, Tokyo 105-0023 (JP); SHINODA, Tatsuya, Tokyo 105-0023 (JP); NEGISHI, Nobuyasu, Tokyo 105-0023 (JP)
(74) Representative: Hoffmann Eitle
(86) International application number: PCT/JP2020/046525
(87) International publication number: WO 2022/130450

(57) **Abstract**

In an embodiment, a battery includes a container, a lid member, an electrode group, a current collecting tab, an electrode terminal, a lead and a spacer. The lid member is attached to a peripheral wall of the container with an opening of an inner cavity being closed. The current collecting tab protrudes in the electrode group in the inner cavity toward a side where the lid member is located, and the lead electrically connects the current collecting tab and the electrode terminal located in an outer surface of the lid member. The spacer is integrally formed of an electrically insulating material. The spacer includes a top plate portion sandwiched between the lead and the lid member, and a peripheral plate portion extending from the top plate portion toward a side where the electrode group is located and covering the lead and the current collecting tab in the inner cavity from an outer peripheral side.

## Description

### FIELD

Embodiments described herein of this invention relate generally to batteries.

### BACKGROUND

Along with the progress of electronic devices such as mobile phones and personal computers, batteries such as secondary batteries used in the electronic devices are required to be small in size and light in weight. A lithium ion secondary battery is an example of a secondary battery that is reduced in size and weight and that has a high energy density. Meanwhile, secondary batteries such as lead-acid storage batteries and nickel-metal hydride batteries are used as large-sized, high-capacity power sources mounted on vehicles such as electric automobiles, hybrid automobiles, electric motorcycles or forklifts. In recent years, lithium-ion secondary batteries with a high energy density have been developed for use as large-sized, high-capacity power sources to be mounted on vehicles. In the development of lithium-ion secondary batteries to be mounted on vehicles, it is required to realize longer battery life and improved safety, as well as to increase the size and capacity of the batteries.

As a battery, such as a lithium ion secondary battery, there is a battery in which an electrode group including a positive electrode and a negative electrode is housed in the inner cavity of a container. In this type of battery, the container has a bottom wall and a peripheral wall, and the inner cavity of the container is open in the height direction such that the opening is opposite to the bottom wall. A lid member is attached to the peripheral wall of the container, and the opening of the inner cavity is closed by the lid member. In the battery, electrode terminal is arranged on the outer surface of the lid member in the state where they are exposed to the outside.

As described above, the battery in which an electrode group is arranged inside the inner cavity of the container includes a battery in which current collecting tab protrudes toward the side where the lid member is located in the electrode group. In the inner cavity of such a battery, a lead is arranged between the electrode group and the lid member in the height direction of the battery, and the electrode terminal is electrically connected to the current collecting tab by means of the lead or the like. In the inner cavity, an electrically insulating spacer covers the lead and current collecting tab from the outer peripheral side. In the battery, the spacer prevents the lead and current collecting tab from coming into contact with the container and electrically isolates the lead and current collecting tab from the container. Further, in the battery, the spacer comes into contact with the electrode group from the side where the lid member is located in the height direction, and restricts the movement of the electrode group along the height direction.

As described above, in the battery in which the current collecting tab protrudes toward the side where the lid member is located in the electrode group housed in the inner cavity, there is a demand that the components which are arranged in the inner cavity, including the spacer, and the lid member are to be easily assembled with each other.

### CITATION LIST

### PATENT LITERATURE

Patent Literature 1: Jpn. Pat. Appln. KOKAI Publication 2011-070915
Patent Literature 2: Jpn. Pat. Appln. KOKAI Publication 2011-076852

### SUMMARY

### TECHNICAL PROBLEM

The problem to be solved by the present invention is to provide a battery in which the current collecting tab protrudes toward the side where the lid member is located in the electrode group, and the components arranged in the inner cavity of the container and the lid member can be easily assembled with each other.

### SOLUTION TO PROBLEM

According to an embodiment, A battery includes a container, a lid member, an electrode group, a current collecting tab, an electrode terminal, a lead and a spacer. The container includes a bottom wall and a peripheral wall and defines an inner cavity that is open in a height direction toward a side opposite to a side where the bottom wall is located. The lid member is attached to the peripheral wall of the container in a state in which an opening of the inner cavity is closed. The electrode group includes a positive electrode and a negative electrode and is arranged in the inner cavity of the container. The current collecting tab protrudes in the electrode group toward a side where the lid member is located. The electrode terminal is exposed in an outer surface of the lid member. The lead is arranged between the electrode group and the lid member in the inner cavity and electrically connects the current collecting tab and the electrode terminal to each other. The spacer is integrally formed of an electrically insulating material. The spacer includes a top plate portion sandwiched between the lead and the lid member, and a peripheral plate portion extending from the top plate portion toward a side where the electrode group is located and covering the lead and the current collecting tab in the inner cavity from an outer peripheral side. The peripheral plate portion of the spacer comes into contact with the electrode group from a side where the lid member is located.

### BRIEF DESCRIPTION OF THE DRAWINGS

FIG. 1 is a perspective view showing each member of a battery according to a first embodiment in an exploded manner.
FIG. 2 is a perspective view showing the battery according to the first embodiment.
FIG. 3 is a perspective view showing an assembled body into which components to be arranged in the inner cavity, a lid member, etc. are assembled and which is to be installed in the battery according to the first embodiment.
FIG. 4 is a perspective view showing a lid member and its neighboring structure in the assembled body shown in FIG. 3.
FIG. 5 is a perspective view showing the lid member and its neighboring structure in the assembled body shown in FIG. 3 when they are viewed from a direction different from that of FIG. 4.
FIG. 6 is a perspective view showing a spacer of the battery according to the first embodiment.
FIG. 7 is a perspective view showing the spacer of the battery according to the first embodiment when it is viewed from a direction different from that shown in FIG. 6.
FIG. 8 is a perspective view showing one of a pair of electrode group end surfaces in each of two electrode groups and their neighboring structures in the battery according to the first embodiment.
FIG. 9 is a cross-sectional view schematically showing one of a pair of electrode group end surfaces in each of the two electrode groups and their neighboring structures in the battery according to the first embodiment in a cross section perpendicular or substantially perpendicular to the height direction of the battery.

### DESCRIPTION OF EMBODIMENTS

A description will now be given of embodiments with reference to the accompanying drawings.

### (First Embodiment)

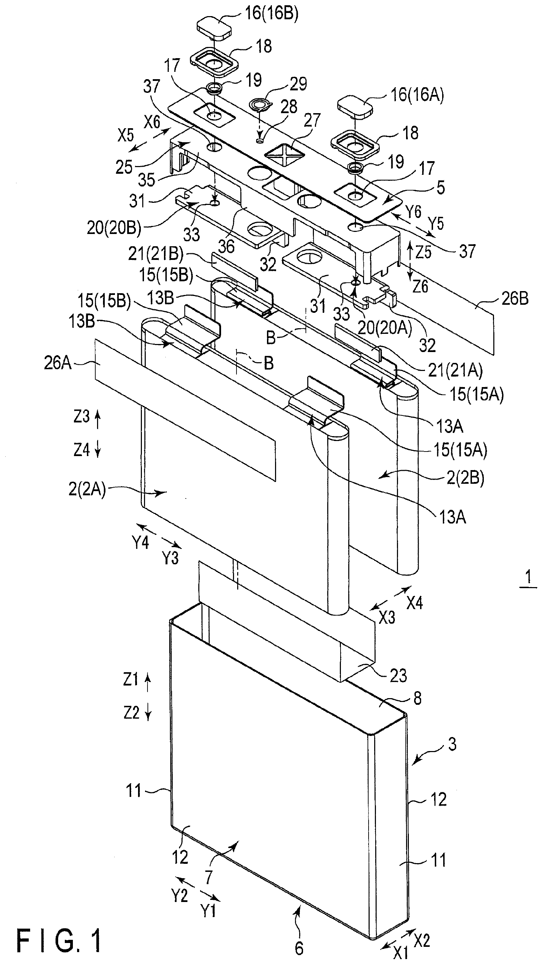

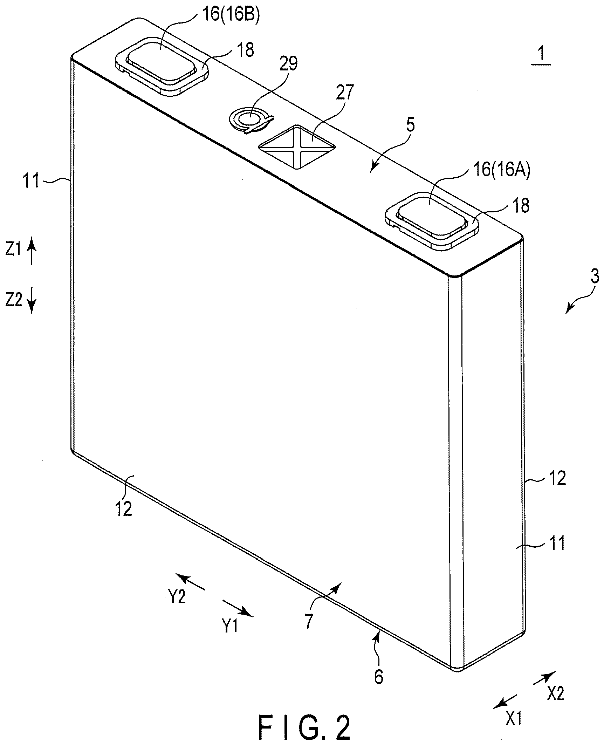

FIGS. 1 and 2 show a battery 1 according to the first embodiment. As shown in FIGS. 1 and 2, the battery 1 includes an electrode group 2, a container 3 and a lid member 5. Each of the container 3 and the lid member 5 is made of metal, such as aluminum, aluminum alloy, iron, copper or stainless steel. The battery 1 (the container 3) is defined in terms of a depth direction (the direction indicated by arrows X1 and X2), a lateral direction (the direction indicated by arrows Y1 and Y2) intersecting the depth direction (perpendicular or substantially perpendicular thereto), and a height direction (the direction indicated by arrows Z1 and Z2) intersecting both the depth direction and the lateral direction (perpendicular or substantially perpendicular thereto). In each of the battery 1 and the container 3, the dimension in the depth direction is smaller than the dimension in the lateral direction and the dimension in the height direction. FIG. 1 is a perspective view showing each member of the battery 1 in an exploded manner, and FIG. 2 is a perspective view.

The container 3 includes a bottom wall 6 and peripheral wall 7. Inside the container 3, an inner cavity 8 in which the electrode group 2 is housed is defined by the bottom wall 6 and the peripheral wall 7. In the height direction, the inner cavity 8 of the container 3 is open toward the side opposite to the side where the bottom wall 6 is located. The peripheral wall 7 include two pairs of side walls 11 and 12. The pair of side walls 11 are opposed to each other such that the inner cavity 8 is sandwiched in the lateral direction. The pair of side walls 12 are opposed to each other such that the inner cavity 8 is sandwiched in the depth direction. Each of the side walls 11 continuously extends along the depth direction between the side walls 12. Each of the side walls 12 continuously extends along the lateral direction between the side walls 11. The lid member 5 is attached to the peripheral wall 7 in an end portion opposite to the bottom wall 6. Therefore, the lid member 5 closes the opening of the inner cavity 8 of the container 3. The lid member 5 and the bottom wall 6 face each other, with the inner cavity 8 located therebetween in the height direction.

In one example shown in FIG. 1 etc., two electrode groups 2 are arranged in the inner cavity 8. In the inner cavity 8, a plurality of electrode groups 2 (two electrode groups 2) are arranged side by side in the depth direction. One of the two electrode groups 2 will be referred to as an electrode group 2A (first electrode group), and the other one different from the electrode group 2A will be referred to as an electrode group 2B (second electrode group). The electrode group 2B is arranged adjacent to the electrode group 2A in the depth direction. Each of the electrode groups 2 includes a positive electrode 13A and a negative electrode 13B. In each of the electrode groups 2, a separator (not shown) is interposed between the positive electrode 13A and the negative electrode 13B. The separator is formed of an electrically insulating material, and electrically insulates the positive electrode 13A from the negative electrode 13B.

The positive electrode 13A includes a positive electrode current collector, such as a positive electrode current collector foil, and a positive electrode active material-containing layer (not shown) supported on the surface of the positive electrode current collector. The positive electrode current collector is, for example, an aluminum foil, an aluminum alloy foil or the like and has a thickness of about 10 µm to 20 um, but the positive electrode current collector is not limited to this. The positive electrode active material-containing layer includes a positive electrode active material and may optionally include a binder and a conductive agent. Examples of the positive electrode active material are an oxide, a sulfide and a polymer that can occlude and release lithium ions, but the positive electrode active material is not limited to these examples. The positive electrode current collector includes a positive electrode current collecting tab 15A as a portion on which the positive electrode active material-containing layer is not supported.

The negative electrode 13B includes a negative electrode current collector, such as a negative electrode current collector foil, and a negative electrode active material-containing layer (not shown) supported on the surface of the negative electrode current collector. The negative electrode current collector is, for example, an aluminum foil, an aluminum alloy foil, a copper foil or the like and has a thickness of about 10 µm to 20 µm, but is not limited to this example. The negative electrode active material-containing layer contains a negative electrode active material and may optionally contain a binder and a conductive agent. Examples of the negative electrode active material include a metal oxide, a metal sulfide, a metal nitride and a carbon material that can occlude and release lithium ions, but the negative electrode active material is not limited to these examples. The negative electrode current collector includes a negative electrode current collecting tab 15B as a portion where the negative electrode active material-containing layer is not supported.

In each of the electrode groups 2 of the example shown in FIG. 1 etc., the positive electrode 13A, the negative electrode 13B and the separator are wound, with the winding axis B as a center, in the state where the separator is sandwiched between the positive electrode active material-containing layer and the negative electrode active material-containing layer. In each of the electrode groups 2, the outermost portion of the wound structure is made of an electrically insulating material. In one example, in each of the electrode groups 2, the outermost portion of the wound structure is made of a separator. In each of the electrode groups 2, the positive electrode current collecting tab 15A protrudes from the positive electrode active material-containing layer, the negative electrode active material-containing layer and the separator toward one side in the axial direction (the direction indicated by arrows Z3 and Z4) along the winding axis B. In each of the electrode groups 2, the negative electrode current collecting tab 15B protrudes from the positive electrode active material-containing layer, the negative electrode active material-containing layer and the separator toward the side where the positive electrode current collecting tab 15A protrudes, in the axial direction along the winding axis B. Therefore, in each of the electrode groups 2, the pair of current collecting tabs 15 (namely, the positive electrode current collecting tab 15A and the negative electrode current collecting tab 15B) protrude toward the same side in the axial direction along the winding axis B.

Each of the electrode groups 2 is defined in terms of a width direction (the direction indicated by arrows Y3 and Y4) intersecting (perpendicular or substantially perpendicular to) the axial direction of the winding axis B (the protruding direction of the current collecting tabs 15), and a thickness direction (the direction indicated by arrows X3 and X4) intersecting both the axial direction of the winding axis B and the width direction. In each of the electrode groups 2, the dimension in the thickness direction is smaller than the dimension in the axial direction and the dimension in the width direction. In other words, each of the electrode groups 2 is formed having a flat shape. Further, in each of the pair of current collecting tabs 15 of each electrode group 2, a plurality of belt-like portions are bound.

In the present embodiment, each of the electrode groups 2 is arranged in the inner cavity 8 in the state where the winding axis B is along the height direction of the battery 1, that is, in the state where the axial direction corresponds or substantially corresponds to the height direction of the battery 1. In each of the electrode groups 2, the width direction corresponds or substantially corresponds to the lateral direction of the battery 1, and the thickness direction corresponds or substantially corresponds to the depth direction of the battery 1. Each of the electrode groups 2 is arranged in the inner cavity 8 in a state where a pair of current collecting tabs 15 protrude toward the side where the lid member 5 is located in the height direction of the battery 1. In each of the electrode groups 2, the pair of current collecting tabs 15 are arranged apart from each other in the lateral direction of the battery 1. Therefore, in each of the electrode groups 2, the positive electrode current collecting tab 15A does not come into contact with the negative electrode current collecting tab 15B.

In the inner cavity 8, each of the electrode groups 2 holds (is impregnated with) an electrolytic solution (not shown). The electrolytic solution may be a non-aqueous electrolytic solution in which an electrolyte is dissolved in an organic solvent, or an aqueous electrolytic solution such as an aqueous solution. A gel electrolyte may be used instead of the electrolytic solution, or a solid electrolyte may be used. Where a solid electrolyte is used as the electrolyte, the solid electrolyte in each of the electrode groups 2 is interposed between the positive electrode 13A and the negative electrode 13B, in place of the separator. In this case, in each of the electrode groups 2, the solid electrolyte electrically insulates the positive electrode 13A from the negative electrode 13B.

In the battery 1, a pair of electrode terminals 16 are attached to the lid member 5. The electrode terminals 16 are made of a conductive material such as metal. One of the pair of electrode terminals 16 is a positive terminal (16A) of the battery 1, and the other one of the pair of electrode terminals 16, which is different from the positive terminal (16A), is a negative terminal (16B) of the battery 1. Each of the electrode terminals 16 is arranged on the outer surface of the lid member 5 in a state where they are exposed to the outside of the battery 1. The pair of electrode terminals 16 are arranged apart from each other in the lateral direction of the battery 1.

A pair of through-holes 17 are formed in the lid member 5, and each of the through-holes 17 penetrates the lid member 5 in the height direction of the battery 1. On the outer surface of the lid member 5, an insulating member 18 is provided between each of the electrode terminals 16 and the lid member 5. An insulating gasket 19 is arranged in each of the through-holes 17. Each of the electrode terminals 16 is electrically insulated from the lid member 5 and the container 3 by the insulating member 18 and the insulating gasket 19.

A pair of leads 20 and a pair of backup leads 21 are arranged in the inner cavity 8 of the container 3. Each of the leads 20 and the backup leads 21 is made of a conductive material such as metal, and examples of materials forming the leads 20 and the backup leads 21 include aluminum, stainless steel, copper and iron. In the inner cavity 8, the leads 20 are arranged between the electrode groups 2 and the lid member 5 in the height direction of the battery 1.

One of the pair of leads 20 is a positive electrode side lead (20A), and the other one of the pair of leads 20, which is different from the positive electrode side lead, is a negative electrode side lead (20B). One of the pair of backup leads 21 is a positive electrode side backup lead (21A), and the other one of the pair of backup leads 21, which is different from the positive electrode side backup lead (21A), is a negative electrode side backup lead (21B). The positive electrode side lead 20A and the positive electrode side backup lead 21A are arranged apart from the negative electrode side lead 20B and the negative electrode side backup lead 21B in the lateral direction of the battery 1. Therefore, the positive electrode side lead 20A and the positive electrode side backup lead 21A do not come into contact with the negative electrode side lead 20B and the negative electrode side backup lead 21B, respectively.

The positive electrode current collecting tab 15A of each of the electrode groups 2 is electrically connected to the positive terminal 16A, via the backup lead 21A and the lead 20A in this order. Therefore, the lead 20A forms at least part of an electrical path between the positive electrode current collecting tab 15A and the positive terminal 16A. The negative electrode current collecting tab 15B of each of the electrode groups 2 is electrically connected to the negative terminal 16B, via the backup lead 21B and the lead 20B in this order. Therefore, the lead 20B forms at least part of an electrical path between the negative electrode current collecting tab 15B and the negative terminal 16B.

An insulating tape 23 is attached to each of the electrode groups 2 from the side where the bottom wall 6 is located in the height direction. The insulating tape 23 is made of an electrically insulating material. The insulating tape 23 is closely attached and adhered to each of the electrode groups 2 in the inner cavity 8 and is sandwiched between each of the electrode groups 2 and the bottom wall 6 in the height direction of the battery 1. The two (plurality of) electrode groups 2 are bundled into one by the insulating tape 23.

A spacer 25 is incorporated in the inner cavity 8 of the container 3. The spacer 25 is integrally formed of an electrically insulating material. The spacer 25 is arranged between the electrode groups 2 and the lid member 5 in the height direction of the battery 1. In the inner cavity 8, an insulating tape 26A is attached to the electrode group 2A and the spacer 25, and an insulating tape 26B is attached to the electrode group 2B and the spacer 25. Each of the insulating tapes 26A and 26B is made of an electrically insulating material. The insulating tape 26A is closely attached and adhered to the electrode group 2A and the spacer 25 and secures the electrode group 2A to the spacer 25. The insulating tape 26B is closely attached and adhered to the electrode group 2B and the spacer 25 and secures the electrode group 2B to the spacer 25.

The spacer 25 and the insulating tapes 26A and 26B prevent the pair of current collecting tabs 15 of each of the electrode groups 2, the pair of leads 20 and the pair of backup leads 21 from coming into contact with the container 3 and the lid member 5. Therefore, the spacer 25 and the insulating tapes 26A and 26B electrically insulate the current collecting tabs 15, the leads 20 and the backup leads 21 from the container 3 and the lid member 5.

In one example shown in FIG. 1, FIG. 2 etc., the lid member 5 has a gas release valve 27 and a liquid injection port 28. A sealing plate 29 that closes the liquid injection port 28 is welded to the outer surface of the lid member 5. The gas release valve 27 and the liquid injection port 28 are arranged between the electrode terminals 16 in the lateral direction of the battery 1. It should be noted that in one example, the gas release valve 27 and the liquid injection port 28 need not be provided for the battery 1.

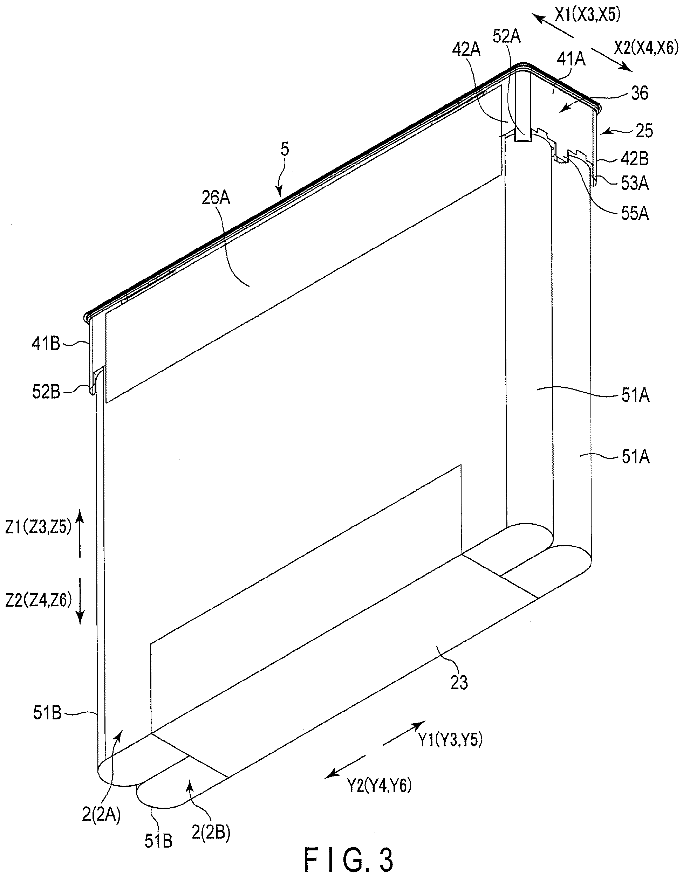

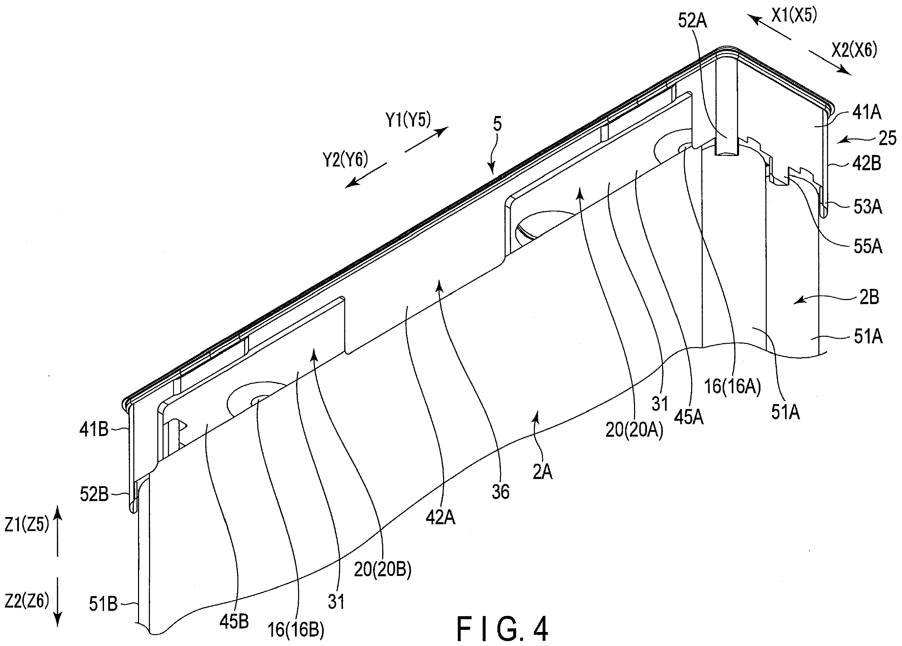

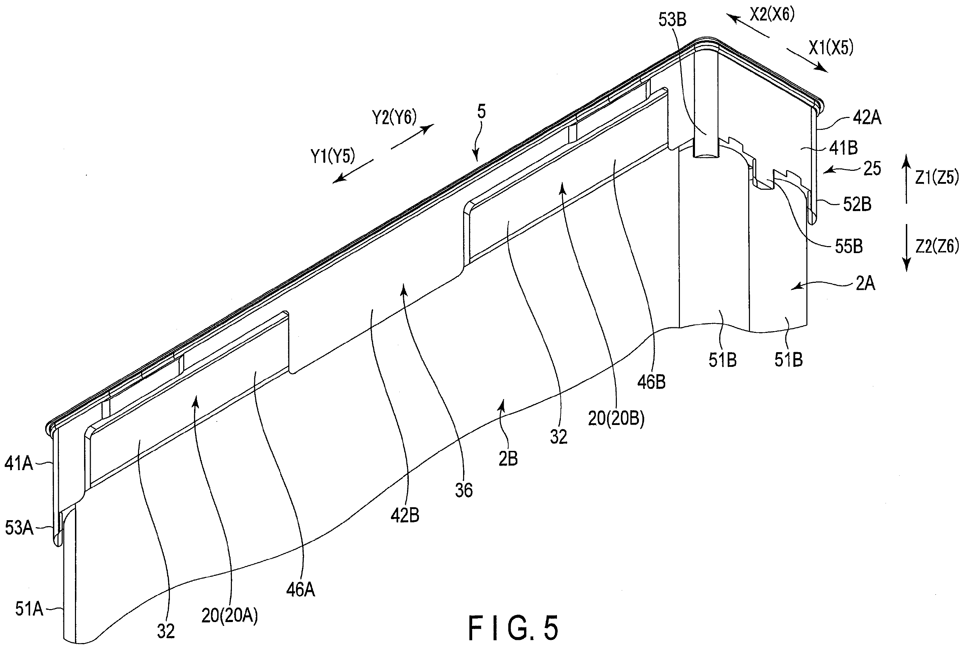

In the battery 1, the internal components (including the electrode groups 2, the leads 20 and the spacer 25) to be arranged in the inner cavity 8, the lid member 5, the electrode terminals 16, etc. are assembled to form an assembled body. FIG. 3 shows an assembled body into which the internal components in the inner cavity 8, the lid member 5 etc. are assembled. FIGS. 4 and 5 show the lid member 5 and its neighboring structure in the assembled body shown in FIG. 3. FIGS. 4 and 5 are views of different viewing directions, and illustration of the insulating tapes 26A and 26B described above is omitted.

In one example shown in FIGS. 1 to 5 etc., each of the pair of leads 20 includes a lead top plate portion 31 and a lead side plate portion 32. Each of the leads 20 is arranged in the inner cavity 8 in a state where the thickness direction of the lead top plate portion 31 corresponds or substantially corresponds to the height direction of the battery 1 and where the thickness direction of the lead side plate portion 32 corresponds or substantially corresponds to the depth direction of the battery 1. In each of the leads 20, the lead side plate portion 32 is bent with respect to the lead top plate portion 31 toward the side where the electrode groups 2 (bottom wall 6) are located in the height direction of the battery 1. In each of the leads 20, the lead side plate portion 32 is connected to one side edge of the lead top plate portion 31 in the depth direction of the battery 1. In each of the leads 20, an "L" shape or a substantial "L" shape is formed by the lead top plate portion 31 and the lead side plate portion 32 in a cross section perpendicular or substantially perpendicular to the lateral direction of the battery 1.

Each of the leads 20 has a through-hole 33 that penetrates the lead top plate portion 31 in the height direction of the battery 1 (in the thickness direction of the lead top plate portion 31). A corresponding one of the electrode terminals 16 is connected to each of the leads 20 at the through-hole 33. Therefore, in each of the leads 20, the through-hole 33 of the lead top plate portion 31 serves as a connection position of the corresponding one of the electrode terminals 16. The corresponding one of the electrode terminals 16 is connected to each of the leads 20 by caulking or the like.

In one example shown in FIGS. 1 to 5 etc., the backup leads 21A sandwich the binding portion of the positive electrode current collecting tab 15A of the electrode group 2A and the binding portion of the positive electrode current collecting tab 15A of the electrode group 2B. The binding portions of the positive electrode current collecting tabs 15A of the two electrode groups 2 are joined to the lead 20A, with the backup lead 21A interposed therebetween. In the lead 20A, the positive electrode current collecting tabs 15A are joined to the lead side plate portion 32, and the positive electrode current collecting tabs 15A are joined, for example, by ultrasonic welding. Similarly, the backup leads 21B sandwich the binding portion of the negative electrode current collecting tab 15B of the electrode group 2A and the binding portion of the negative electrode current collecting tab 15B of the electrode group 2B. The binding portions of the negative electrode current collecting tabs 15B of the two electrode groups 2 are joined to the lead 20B, with the backup lead 21B interposed therebetween. In the lead 20B, the negative electrode current collecting tabs 15B are joined to the lead side plate portion 32, and the negative electrode current collecting tabs 15B are joined, for example, by ultrasonic welding.

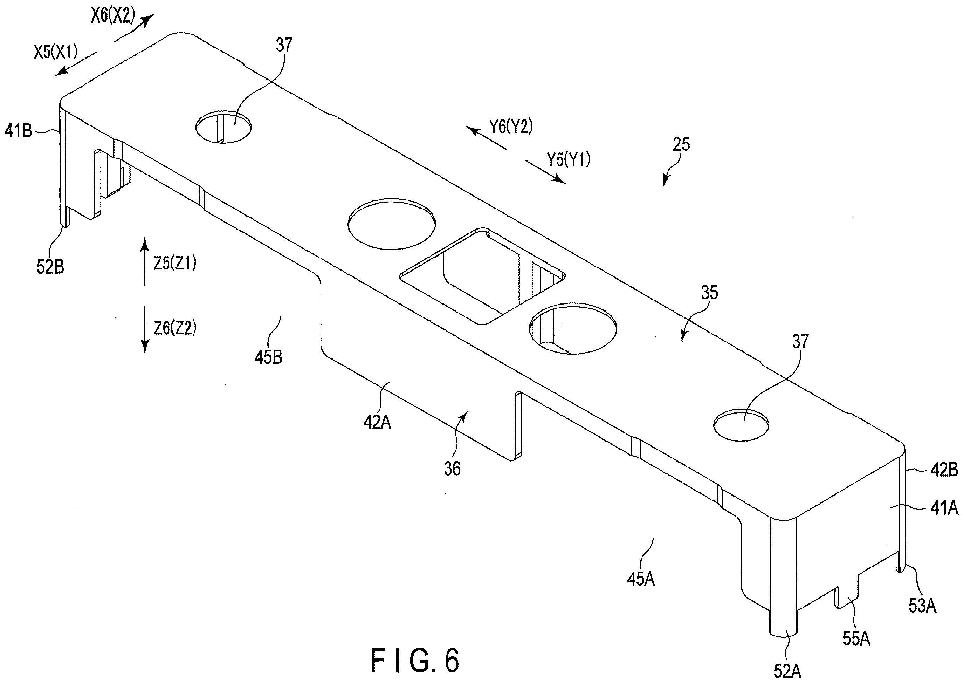

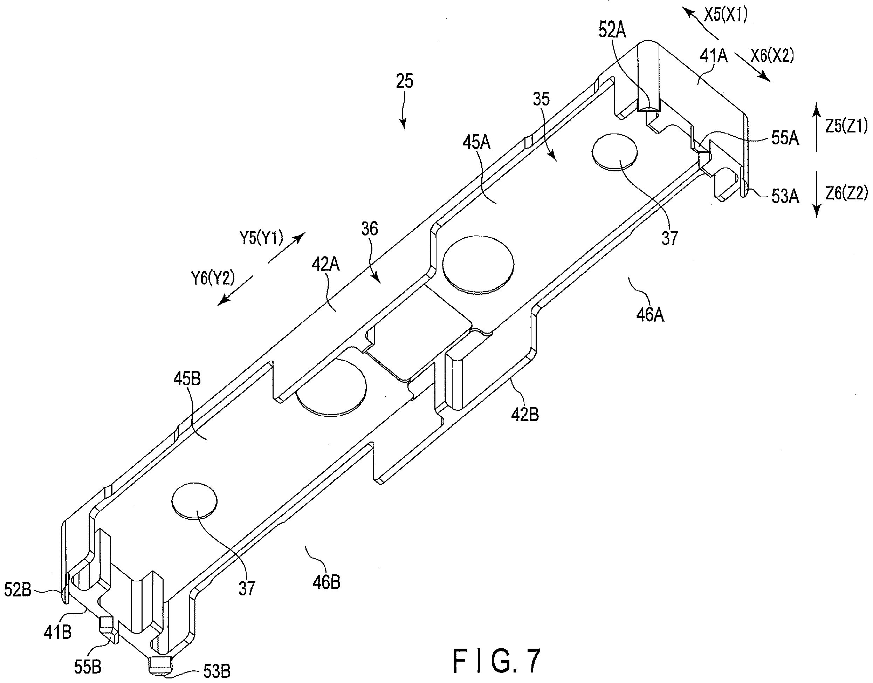

FIGS. 6 and 7 show the spacer 25. FIGS. 6 and 7 differ from each other in viewing direction. As shown in FIGS. 1, 6, 7 etc., the spacer 25 is defined in terms of a length direction (the direction indicated by arrows Y5 and Y6), a width direction (the direction indicated by arrows X5 and X6) intersecting the length direction (perpendicular or substantially perpendicular thereto), and a height direction (the direction indicated by arrows Z5 and Z6) intersecting both the length direction and the width direction (perpendicular or nearly perpendicular thereto). In the spacer 25, the dimension in the length direction is larger than the dimension in the width direction and the dimension in the height direction. The spacer 25 is arranged in the inner cavity 8 in the state where the height direction thereof corresponds or substantially corresponds to the height direction of the battery 1 and the width direction thereof corresponds or substantially corresponds to the depth direction of the battery 1. Therefore, in the spacer 25 arranged in the inner cavity 8, the length direction corresponds or substantially corresponds to the lateral direction of the battery 1.

The spacer 25 includes a top plate portion 35 and a peripheral plate portion 36. The top plate portion 35 is sandwiched between the lead top plate portion 31 of each of the leads 20 and the lid member 5 in the height direction of the battery 1. The top plate portion 35 prevents the leads 20 and current collecting tabs 15 from coming into contact with the lid member 5. The top plate portion 35 is arranged in the inner cavity 8 in the state where the thickness direction thereof corresponds or substantially corresponds to the height direction of the spacer 25, that is, in the state where the thickness direction thereof corresponds or substantially corresponds to the height direction of the battery 1.

A pair of through-holes 37 are formed in the top plate portion 35 along the height direction of the spacer 25 (the thickness direction of the top plate portion 35). Each of the through-holes 37 penetrates the top plate portion 35 along the height direction of the battery 1. The pair of through-holes 37 are arranged apart from each other in the lateral direction of the battery 1 (in the length direction of the spacer 25). Each of the electrode terminals 16 is inserted through the corresponding one of the through-holes 17 of the lid member 5, the corresponding one of the through-holes 37 of the spacer 25, and the through-hole 33 of the corresponding one of the leads 20, in the order mentioned. Each of the electrode terminals 16 is connected to the corresponding one of the leads 20 at the through-hole 33, as described above.

The peripheral plate portion 36 extends from the outer edge of the top plate portion 35 toward the side where the electrode groups 2 (bottom wall 6) are located in the height direction of the battery 1. Therefore, the peripheral plate portion 36 protrudes from the top plate portion 35 toward the side where the electrode groups 2 are located. The peripheral plate portion 36 extends along the outer edge of the top plate portion 35 and is formed over the entire circumference of an outer periphery of the top plate portion 35. In the inner cavity 8, the two pairs of current collecting tabs 15 and the one pair of leads 20 are covered from the outer peripheral side of the inner cavity 8 by the peripheral plate portion 36 of the spacer 25. The peripheral plate portion 36 covers the current collecting tabs 15 and the leads 20 over the entire circumference of the inner cavity 8 in the circumferential direction.

The peripheral plate portion 36 includes a pair of side plate portions 41A and 41B and a pair of side plate portions 42A and 42B. The side plate portions 41A and 41B face each other, with the current collecting tabs 15 and the leads 20 being interposed therebetween in the lateral direction of the battery 1 (the length direction of the spacer 25). Therefore, the side plate portion 41A covers the current collecting tabs 15 and the leads 20 from one side in the lateral direction of the battery 1, and the side plate portion 41B covers the current collecting tabs 15 and the leads 20 from the side opposite to the side plate portion 41A in the lateral direction of the battery 1. The side plate portions 42A and 42B face each other, with the current collecting tabs 15 and the leads 20 interposed therebetween in the depth direction of the battery 1 (the width direction of the spacer 25). Therefore, the side plate portion 42A covers the current collecting tabs 15 and the leads 20 from one side in the depth direction of the battery 1, and the side plate portion 42B covers the current collecting tabs 15 and the leads 20 from the side opposite to the side plate portion 42A in the depth direction of the battery 1.

Each of the side plate portions 41A and 41B extends continuously along the depth direction of the battery 1 between the side plate portions 42A and 42B. The thickness direction of each of the side plate portions 41A and 41B corresponds or substantially corresponds to the lateral direction of the battery 1 and corresponds or substantially corresponds to the length direction of the spacer 25. Further, each of the side plate portions 42A and 42B extends continuously along the lateral direction of the battery 1 between the side plate portions 41A and 41B. The thickness direction of each of the side plate portions 42A and 42B corresponds or substantially corresponds to the depth direction of the battery 1 and corresponds or substantially corresponds to the width direction of the spacer 25.

In the inner cavity 8, the peripheral plate portion 36 is located between the top plate portion 35 of the spacer 25 and the electrode groups 2, in the height direction of the battery 1. The peripheral plate portion 36 of the spacer 25 comes into contact with each of the electrode groups 2 from the side where the lid member 5 is located in the height direction of the battery 1. Therefore, each of the electrode groups 2 is pressed by the peripheral plate portion 36 of the spacer 25 toward the side where the bottom wall 6 is located in the height direction of the battery 1. Pressed by the peripheral plate portion 36, movement of the electrode groups 2 along the height direction of the battery 1 is restricted in the inner cavity 8. In addition, the peripheral plate portion 36 comes into contact with each of the electrode groups 2 at the protruding end of the protruding portion from the top plate portion 35 toward the side where the electrode groups 2 are located.

Through-holes 45A, 45B, 46A and 46B penetrating the peripheral plate portion 36 are formed in the peripheral plate portion 36. Each of the through-holes 45A and 45B is formed in the side plate portion 42A and penetrates the side plate portion 42A along the depth direction of the battery 1. Each of the through-holes 46A and 46B is formed in the side plate portion 42B and penetrates the side plate portion 42B along the depth direction of the battery 1. The through-holes 45A and 46A are formed apart from the through-holes 45B and 46B in the lateral direction of the battery 1 (the length direction of the spacer 25). The central position of the spacer 25 in the lateral direction of the battery 1 is located between the through-holes 45A and 45B and between the through-holes 46A and 46B.

The through-hole 45A is not shifted or is hardly shifted from the through-hole 46A in the lateral direction and the height direction of the battery 1. Therefore, the through-hole 45A (first through-hole) overlaps the through-hole 46A (second through-hole) when they are projected from the depth direction of the battery 1. In addition, the through-holes 45A and 46A are not shifted or are hardly shifted from the positive electrode current collecting tabs 15A of the electrode groups 2 and the positive electrode side lead 20A in the lateral direction and the height direction of the battery 1. Therefore, the through-holes 45A and 46A overlap the current collecting tabs 15A and the lead 20A when they are projected from the depth direction of the battery 1. In the inner cavity 8 of the battery 1, the through-hole 45A (first through-hole) is located on one side in the depth direction with respect to the current collecting tab 15A and the lead 20A. The through-hole 46A (second through-hole) is located on the side opposite to the through-hole 45A in the depth direction of the battery 1 with respect to the current collecting tab 15A and the lead 20A.

The through-hole 45B is not shifted or is hardly shifted from the through-hole 46B in the lateral direction and the height direction of the battery 1. Therefore, the through-hole 45B (first through-hole) overlaps the through-hole 46B (second through-hole) when they are projected from the depth direction of the battery 1. In addition, the through-holes 45B and 46B are not shifted or are hardly shifted from the negative electrode current collecting tabs 15B of the electrode groups 2 and the negative electrode side lead 20B in the lateral direction and the height direction of the battery 1. Therefore, the through-holes 45B and 46B overlap the current collecting tabs 15B and the lead 20B when they are projected from the depth direction of the battery 1. In the inner cavity 8 of the battery 1, the through-hole 45B (first through-hole) is located on one side in the depth direction with respect to the current collecting tab 15B and the lead 20B. The through-hole 46B (second through-hole) is located on the side opposite to the through-hole 45B in the depth direction of the battery 1 with respect to current collecting tab 15B and the lead 20B.

At the portions of the through-holes 45A, 45B, 46A and 46B of the peripheral plate portion 36, the protrusion from the top plate portion 35 toward the side where the electrode groups 2 are located is smaller than at portions other than the through-holes 45A, 45B, 46A and 46B of the peripheral plate portion 36. Therefore, when projected from the depth direction of the battery 1 (the width direction of the spacer 25), the protruding end of the peripheral plate portion 36 is recessed toward the side where the top plate portion 35 (lid member 5) is located at the portions of the through-holes 45A, 45B, 46A and 46B. The peripheral plate portion 36 contacts each of the electrode groups 2 at positions different from the through-holes 45A, 45B, 46A and 46B in the circumferential direction of the inner cavity 8, and does not contact the electrode groups 2 at the portions where the through-holes 45A and 45B, 46A and 46B are formed in the circumferential direction of the inner cavity 8.

The insulating tape 26A is attached to the electrode group 2A and the spacer 25 from one side in the depth direction of the battery 1. The insulating tape 26A is closely attached and adhered to the electrode group 2A from the side opposite to the side where the electrode group 2B is located. In addition, the insulating tape 26A is closely attached and adhered to the outer surface of the side plate portion 42A of the peripheral plate portion 36 in the spacer 25. The through-holes 45A and 45B formed in the side plate portion 42A are closed by the insulating tape 26A. The insulating tape 26B is attached to the electrode group 2B and the spacer 25 from the side opposite to the insulating tape 26A in the depth direction of the battery 1. The insulating tape 26B is closely attached and adhered to the electrode group 2B from the side opposite to the side where the electrode group 2A is located. In addition, the insulating tape 26B is closely attached and adhered to the outer surface of the side plate portion 42B of the peripheral plate portion 36 in the spacer 25. The through-holes 46A and 46B formed in the side plate portion 42B are closed by the insulating tape 26B.

Since the through-holes 45A, 45B, 46A and 46B are closed by the insulating tapes 26A and 26B, the leads 20 and the current collecting tabs 15 are prevented from coming into contact with the peripheral wall 7 of the container 3 through any one of the through-holes 45A, 45B, 46A and 46B. In one example, the insulating tapes 26A and 26B may be replaced with a bag formed of an electrically insulating material, and the through-holes 45A, 45B, 46A and 46B may be closed with the bag. That is, a closing member attached to the electrode groups 2 and the peripheral plate portion 36 of the spacer 25 may be provided in the state where the through-holes 45A, 45B, 46A and 46B are closed, and the closing member may be made of an electrically insulating material.

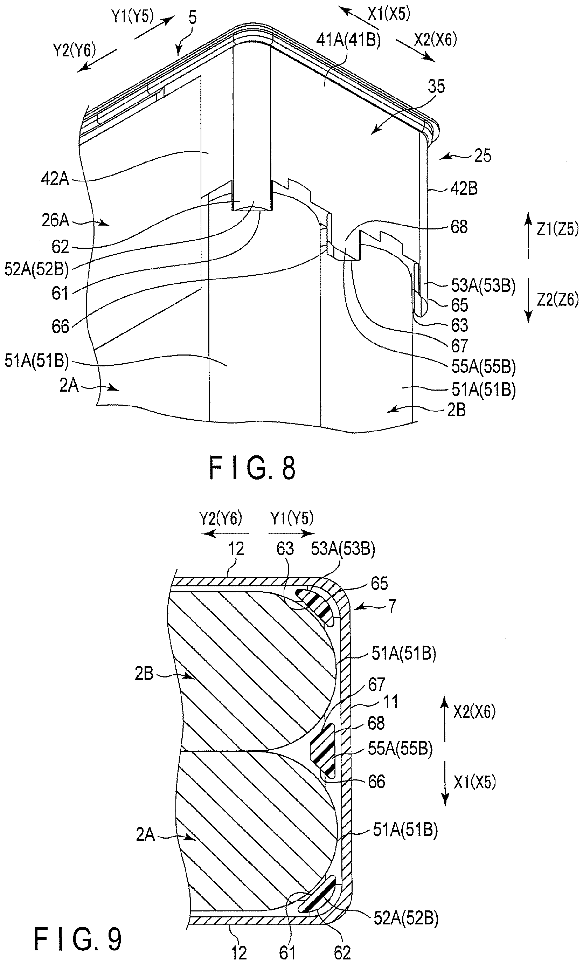

As shown in FIGS. 3 to 5 etc., each of the electrode groups 2 includes a pair of electrode group end surfaces 51A and 51B. On the outer surface of each of the electrode groups 2, the electrode group end surface 51A forms an end portion on one side in the width direction (lateral direction of the battery 1), and the electrode group end surface 51B forms an end portion on the opposite side of the electrode group end surface 51A in the width direction. Therefore, on the outer surface of each of the electrode groups 2, each of the outer end portions of the battery 1 in the lateral direction is formed by the corresponding one of the electrode group end surfaces 51A and 51B. FIGS. 8 and 9 show a structure of one of the pair of electrode group end surfaces 51A and 51B of each electrode group 2 and their neighboring structure. FIG. 8 is a perspective view, and FIG. 9 shows a cross section perpendicular or substantially perpendicular to the height direction of the battery 1. In FIG. 8, illustration of the container 3 is omitted.

In the present embodiment, in each of the electrode groups 2, the positive electrode 13A and the negative electrode 13B are wound, with the winding axis B along the height direction as a center, as described above. As shown in FIGS. 3, 8, 9 etc., the electrode group end surfaces 51A and 51B of each of the electrode groups 2 are formed as curved surfaces. In the present embodiment, the electrode group end surfaces 51A and 51B of each of the electrode groups 2 are arcuate or substantially arcuate in a cross section perpendicular or substantially perpendicular to the height direction of the battery 1.

As shown in FIGS. 3 to 9 etc., the spacer 25 includes a pair of protrusions 52A and 52B (first protrusions), a pair of protrusions 53A and 53B (second protrusions), and a pair of protrusions 55A and 55B (third protrusions). In the peripheral plate portion 36 of the spacer 25, each of the protrusions 52A, 52B, 53A, 53B, 55A and 55B is more protruding toward the side where the bottom wall 6 is located in the height direction of the battery than the portions other than the protrusions 52A, 52B, 53A, 53B, 55A and 55B. In the peripheral plate portion 36 of the spacer 25, the protrusion 52A is formed at the boundary portion between the side plate portions 41A and 42A, and the protrusion 52B is formed at the boundary portion between the side plate portions 41B and 42A. In the peripheral plate portion 36, the protrusion 53A is formed at the boundary portion between the side plate portions 41A and 42B, and the protrusion 53B is formed at the boundary portion between the side plate portions 41B and 42B. In the peripheral plate portion 36, the protrusion 55A is formed at the center of the side plate portion 41A in the width direction of the spacer 25 (the depth direction of the battery 1), and the protrusion 55B is formed at the center of the side plate portion 41B in the width direction of the spacer 25.

Since the protrusions 52A, 52B, 53A, 53B, 55A, and 55B are formed as described above, the protrusions 52A, 53A and 55A are located apart from the protrusions 52B, 53B and 55B in the lateral direction of the battery 1 in the inner cavity 8. The protrusions 52A, 53A and 55A are apart from each other in the depth direction of the battery 1, and the protrusions 52B, 53B and 55B are apart from each other in the depth direction of the battery 1. The protrusions 52A and 52B (first protrusions) are located on the side opposite to the electrode group 2B (second electrode group) with respect to the electrode group 2A (first electrode group), in the depth direction of the battery 1. The protrusions 53A and 53B (second protrusions) are located on the side opposite to the electrode group 2A (first electrode group) with respect to the electrode group 2B (second electrode group), in the depth direction of the battery 1. The protrusions 55A and 55B (third protrusions) are located between the electrode groups 2A and 2B in the depth direction of the battery 1.

The protrusion 52A is close to the electrode group 2A from one side in the lateral direction of the battery 1, and the protrusion 52B is close to the electrode group 2A from the side opposite to the protrusion 52A in the lateral direction of the battery 1. Therefore, each of the protrusions 52A and 52B is close to the electrode group 2A from outside the battery 1 in the lateral direction. The protrusion 52A is adjacent to the electrode group end surface 51A of the electrode group 2A from outside in the lateral direction, and the protrusion 52B is adjacent to the electrode group end surface 51B of the electrode group 2A from outside in the lateral direction. Moreover, the protrusion 53A is close to the electrode group 2B from one side in the lateral direction of the battery 1, and the protrusion 53B is close to the electrode group 2B from the side opposite to the protrusion 53A in the lateral direction of the battery 1. Therefore, each of the protrusions 53A and 53B is close to the electrode group 2B from outside the battery 1 in the lateral direction. The protrusion 53A is adjacent to the electrode group end surface 51A of the electrode group 2B from outside in the lateral direction, and the protrusion 53B is adjacent to the electrode group end surface 51B of the electrode group 2A from outside in the lateral direction.

The protrusion 55A is close to the electrode groups 2A and 2B from one side in the lateral direction of the battery 1, and the protrusion 55B is close to the electrode groups 2A and 2B from the side opposite to the protrusion 55A in the lateral direction of the battery 1. Therefore, each of the protrusions 55A and 55B is close to the electrode groups 2A and 2B from outside the battery 1 in the lateral direction. The protrusion 55A is adjacent to the electrode group end surface 51A of the electrode group 2A and the electrode group end surface 51A of the electrode group 2B from outside in the lateral direction, and the protrusion 52B is adjacent to the electrode group end surface 51B of the electrode group 2A and the electrode group end surface 51B of the electrode group 2B from outside in the lateral direction. Each of the protrusions 52A, 52B, 55A and 55B is close to the electrode group 2A but is not in contact with the electrode group 2A. Similarly, each of protrusions 53A, 53B, 55A, and 55B is close to electrode group 2B but is not in contact with the electrode group 2B.

Each of the protrusions 52A and 52B includes a facing surface (inner facing surface) 61 that faces the electrode group 2A and a facing surface (outer facing surface) 62 that faces the peripheral wall 7 of the container 3. The facing surface 61 of the protrusion 52A is formed to have a shape along the electrode group end surface 51A of the electrode group 2A, and in the present embodiment, it is formed to have a shape along the curved surface of the electrode group end surface 51A. Further, the facing surface 61 of the protrusion 52B is formed to have a shape along the electrode group end surface 51B of the electrode group 2A, and in the present embodiment, it is formed to have a shape along the curved surface of the electrode group end surface 51B. The facing surface 62 of each of the protrusions 52A and 52B is formed to have a shape along the inner surface of the peripheral wall 7.

Each of the protrusions 53A and 53B includes a facing surface (inner facing surface) 63 that faces the electrode group 2B and a facing surface (outer facing surface) 65 that faces the peripheral wall 7 of the container 3. The facing surface 63 of the protrusion 53A is formed to have a shape along the electrode group end surface 51A of the electrode group 2B, and in the present embodiment, it is formed to have a shape along the curved surface of the electrode group end surface 51A. Further, the facing surface 63 of the protrusion 53B is formed to have a shape along the electrode group end surface 51B of the electrode group 2B, and in the present embodiment, it is formed to have a shape along the curved surface of the electrode group end surface 51B. In each of the protrusions 53A and 53B, the facing surface 65 is formed to have a shape along the inner surface of the peripheral wall 7.

Each of the protrusions 55A and 55B includes a facing surface (inner facing surface) 66 that faces the electrode group 2A, a facing surface (inner facing surface) 67 that faces the electrode group 2B, and a facing surface 68 (outer facing surface) that faces the peripheral wall 7 of the container 3. The facing surface 66 of the protrusion 55A is formed to have a shape along the electrode group end surface 51A of the electrode group 2A, and in the present embodiment, it is formed to have a shape along the curved surface of the electrode group end surface 51A. Further, the facing surface 66 of the protrusion 55B is formed to have a shape along the electrode group end surface 51B of the electrode group 2A, and in the present embodiment, it is formed to have a shape along the curved surface of the electrode group end surface 51B. The facing surface 67 of the protrusion 55A is formed to have a shape along the electrode group end surface 51A of the electrode group 2B, and in the present embodiment, it is formed to have a shape along the curved surface of the electrode group end surface 51A. Further, the facing surface 67 of the protrusion 55B is formed to have a shape along the electrode group end surface 51B of the electrode group 2B, and in the present embodiment, it is formed to have a shape along the curved surface of the electrode group end surface 51B. In each of the protrusions 55A and 55B, the facing surface 68 is formed to have a shape along the inner surface of the peripheral wall 7.

As described above, in the present embodiment, the peripheral plate portion 36 covers the leads 20 and the current collecting tabs 15 from outside in the inner cavity, and the peripheral plate portion 36 comes into contact with the electrode groups 2 from the side where the lid member 5 is located. The peripheral plate portion 36 is integrally formed with the top plate portion 35 sandwiched between the leads 20 and the lid member 5. Since the spacer 25 in which the peripheral plate portion 36 is integral with the top plate portion 35 is provided, the internal components to be arranged in the inner cavity 8, including the electrode groups 2, the leads 20 and the spacer 25, and the lid member 5 can be easily assembled with each other. That is, an assembled body in which the internal components to be arranged in the inner cavity 8, the lid member 5, the electrode terminals 16, etc. are assembled can be easily formed. Thus, the workability of forming the assembly during the manufacture the battery 1 is improved.

In the spacer 25 of the present embodiment, the through-holes 45A, 45B, 46A and 46B penetrating the peripheral plate portion 36 are formed. When the above-mentioned assembled body is formed during the manufacture of the battery 1, each of the electrode terminals 16 is connected to the corresponding one of the leads 20 in the state where the top plate portion 35 of the spacer 25 is sandwiched between each of the leads 20 and the lid member 5. Then, each of the current collecting tabs 15 is joined to the corresponding one of the leads 20. In the present embodiment, the through-holes 45A, 45B, 46A, and 46B are formed in the peripheral plate portion 36, so that even though the top plate portion 35 and the peripheral plate portion 36 are integrally formed, a jig or the like used for joining can be brought into contact with each of the leads 20 through any one or more of the through-holes 45A, 45B, 46A and 46B. As a result, even where the top plate portion 35 and the peripheral plate portion 36 are integrally formed, improved workability is ensured in the operation of joining each of the current collecting tabs 15 to the corresponding one of the leads 20.

In the present embodiment, each of the through-holes 45A, 45B, 46A and 46B penetrates the peripheral wall along the depth direction of the battery 1. When projected from the depth direction of the battery 1, the through-holes 45A and 46A overlap each other and also overlap the positive electrode current collecting tabs 15A of the electrode groups 2 and the positive electrode side lead 20A. In addition, when projected from the depth direction of the battery 1, the through-holes 45B and 46B overlap each other and also overlap the negative electrode current collecting tabs 15B of the electrode groups 2 and the negative electrode side lead 20B. For this reason, improved workability is ensured in the operation of connecting each of the positive electrode current collecting tabs 15A of the electrode groups 2 to the positive electrode side lead 20A and the operation of connecting each of the negative electrode current collecting tabs 15B of the electrode groups 2 to the negative electrode side lead 20B.

In the present embodiment, the through-holes 45A, 45B, 46A and 46B are closed by the insulating tapes 26A and 26B, which are closing members, so that the leads 20, the current collecting tabs 15, etc. are prevented from coming into contact with the peripheral wall 7 of the container 3 through any one of the through-holes 45A, 45B, 46A and 46B. Therefore, the leads 20, the current collecting tabs 15, etc. can be effectively prevented from short-circuiting to the container 3 etc. In addition, since the through-holes 45A, 45B, 46A and 46B are closed, the current collecting tabs 15 etc. are effectively prevented from coming into contact with the container 3 when the above-mentioned assembled body is inserted into the inner cavity 8 of the container 3 during the manufacture of the battery 1. This effectively prevents damage to the current collecting tabs 15 etc. during the manufacture of the battery 1.

In the present embodiment, the insulating tape 26A is adhered to the electrode group 2A and the peripheral plate portion 36 and secures the electrode group 2A to the spacer 25. The insulating tape 26B is adhered to the electrode group 2B and the peripheral plate portion 36 and secures the electrode group 2B to the spacer 25. Because of this, the lid member 5 and the spacer 25 are effectively prevented from separating from the electrode groups 2 due to the spring property or the like of the current collecting tabs 15, and the internal components to be arranged in the inner cavity 8 and the lid member 5 can be easily assembled with each other.

In the present embodiment, each of the protrusions 52A, 52B, 53A, 53B, 55A and 55B of the peripheral plate portion 36 of the spacer 25 protrudes toward the side where the bottom wall is located. Each of the protrusions 52A, 52B, 55A and 55B is close to the electrode group 2A from outside the battery 1 in the lateral direction, and the protrusions 52A and 52B have the electrode group 2A interposed with reference to the protrusions 55A and 55B in the depth direction of the battery 1. Therefore, the movement of the electrode group 2A along the depth direction of the battery 1 is restrained by the protrusions 52A, 52B, 55A and 55B. Similarly, the movement of the electrode group 2B along the depth direction of the battery 1 is restrained by the protrusions 53A, 53B, 55A and 55B. As described above, the movement of the electrode groups 2A and 2B in the depth direction of the battery 1 is restrained, so that in the battery 1, the electrode groups 2A and 2B and the internal components, including the current collecting tabs 15 and the leads 20, are restrained from moving in the depth direction.

When the battery 1 is used, gas may be generated from the electrode groups 2 in the inner cavity 8. Due to the generation of the gas in the inner cavity 8, the container 3 may expand. It should be noted here that in the battery 1, the outer surface area of each side wall 12 is much wider than the outer surface areas of each of the bottom wall 6, the side walls 11 and the lid member 5. Thus, the gas generated in the inner cavity 8 causes each of the side walls 12 to expand outward.

As described above, in the present embodiment, the internal components, such as the electrode groups 2, are restrained from moving in the depth direction of the battery 1, by the protrusions 52A, 52B, 53A, 53B, 55A and 55B. Therefore, even if the side walls 12 expand outward due to the generation of the gas, the protrusions 52A, 52B, 53A, 53B, 55A and 55B restrain the internal components from moving in the depth direction of the battery 1. That is, even if the container 3 expands due to the generation of gas, the internal components are properly restrained. Therefore, even if the gas is generated, the influence which an external impact may have on the internal components, including the electrode groups 2, the current collecting tabs 15 and the leads 20, can be suppressed. Since the influence of the external impact on the internal components can be suppressed, damage to the internal components due to the external impact is prevented, and the durability of the internal components is improved.

In the present embodiment, the facing surface 61 of the protrusion 52A and the facing surface 66 of the protrusion 55A are formed to have shapes along the electrode group end surface 51A of the electrode group 2A, and the facing surface 61 of the protrusion 52B and the facing surface 66 of the protrusion 55B are formed to have shapes along the electrode group end surface 51B of the electrode group 2A. Therefore, the movement of the electrode group 2A along the depth direction of the battery 1 is appropriately restrained. Similarly, the facing surface 63 of the protrusion 53A and the facing surface 67 of the protrusion 55A are formed to have shapes along the electrode group end surface 51A of the electrode group 2B, and the facing surface 63 of the protrusion 53B and the facing surface 67 of the protrusion 55B are formed to have shapes along the electrode group end surface 51B of the group 2B. Therefore, the movement of the electrode group 2B along the depth direction of the battery 1 is appropriately restrained.

In the assembled body described above, each of the protrusions 52A, 52B, 55A and 55B is close to the electrode group 2A, and each of the protrusions 53A, 53B, 55A and 55B is close to the electrode group 2B. It should be noted, however, that the spacer 25 is assembled with the electrode groups 2 in such a state that the protrusions 52A, 52B, 53A, 53B, 55A and 55B do not come into contact with any one of the electrode groups 2. Therefore, even though the protrusions 52A, 52B, 53A, 53B, 55A and 55B are provided, the internal components to be arranged in the inner cavity 8 and the lid member 5 can be assembled with each other, with improved workability ensured.

In the present embodiment, the peripheral plate portion 36 is integrally formed with the top plate portion 35, so that proper strength of the peripheral plate portion 36 can be ensured even if the peripheral plate portion 36 is made thin. By using such a thin peripheral plate portion 36, the space in the inner cavity 8 can be increased. Since the space in the inner cavity 8 is increased, expansion of the container 3 due to the gas generated in the electrode groups 2 can be reduced. In addition, since the peripheral plate portion 36 is made thin, the space occupied by each of the leads 20 can be increased in the inner cavity 8. Thus, the electrical resistance in the electrical path between each of the electrode terminals 16 and the electrode groups 2 can be reduced.

### (Modification)

Each of the electrode groups 2 need not have a wound structure in which the positive electrode 13A and the negative electrode 13B are wound, with the winding axis B as a center. In one modification, at least one of the electrode groups 2A and 2B may have a stack structure in which a plurality of positive electrodes and a plurality of negative electrodes are alternately stacked. In the electrode group 2 of the stack structure, the stacking direction of the positive electrodes and the negative electrodes corresponds to the thickness direction, and the electrode group 2 of the stack structure are arranged in the inner cavity 8 in such a state that the stacking direction of the positive electrodes and the negative electrodes corresponds or substantially corresponds to the depth direction of the battery 1. In the electrode group 2 of the stack structure as well, the pair of current collecting tabs 15 protrude toward the side where the lid member 5 is located in the height direction of the battery 1 and are located apart from each other in the lateral direction of the battery 1. Also, on the outer surface of the electrode group 2 of the stack structure, each of the outer end portions in the lateral direction of the battery 1 is formed by the corresponding one of the electrode group end surfaces 51A and 51B.

Even where the electrode group 2A is formed to have a stack structure, the facing surface 61 of the protrusion 52A and the facing surface 66 of the protrusion 55A are formed to have shapes along the electrode group end surface 51A of the electrode group 2A, and the facing surface 61 of the protrusion 52B and the facing surface 66 of the protrusion 55B are formed to have shapes along the electrode group end surface 51B of the electrode group 2A. Therefore, the movement of the electrode group 2A along the depth direction of the battery 1 is appropriately restrained, as in the above-described embodiment. Where the electrode group 2B is also formed to have a stack structure, the facing surface 63 of the protrusion 53A and the facing surface 67 of the protrusion 55A are formed to have shapes along the electrode group end surface 51A of the electrode group 2B, and the facing surface 63 of the protrusion 53B and the facing surface 67 of the protrusion 55B are formed to have shapes along the electrode group end surface 51B of the electrode group 2B. Thus, the movement of the electrode group 2B along the depth direction of the battery 1 is appropriately restrained, as in the above-described embodiment. Therefore, even where at least one of the electrode groups 2A and 2B is formed to have a stack structure, similar advantages to those described in connection with the above embodiment can be obtained.

The number of electrode groups 2 arranged in the inner cavity 8 is not limited to two, and it suffices that one or more electrode groups 2 are arranged in the inner cavity 8. In each modification, however, the pair of current collecting tabs 15 of each of the one or more electrode groups 2 protrude toward the side where the lid member 5 is located in the height direction of the battery 1, and are located apart from each other in the lateral direction of the battery 1. Each of the current collecting tabs 15 is electrically connected to the corresponding one of the pair of electrode terminals 16, with the corresponding one of the pair of leads 20 being interposed therebetween.

In each modification, the top plate portion 35 is sandwiched between the leads 20 and the lid member 5, and in the inner cavity 8, the peripheral plate portion 36 covers the leads 20 and the current collecting tabs 15 from the outer peripheral side. The peripheral plate portion 36 contacts the electrode group 2 from the side where the lid member 5 is located, and the spacer 25 including the top plate portion 35 and the peripheral plate portion 36 is integrally formed of an electrically insulating material. Since the top plate portion 35 and the peripheral plate portion 36 are integral with each other, the internal components to be arranged in the inner cavity 8 of the container 3 and the lid member 5 can be easily assembled with each other in each modification, in the same manner as in the above-described embodiment. In each modification, advantages similar to those described above in connection with the above embodiment are obtained.

According to at least one of the embodiments or examples, the spacer is integrally formed of an electrically insulating material. The spacer is provided with the top plate portion sandwiched between the leads and the lid member, and the peripheral plate portion extending from the top plate portion toward the side where the electrode group is located and covering the lead and the current collecting tab in the inner cavity from the outer peripheral side. Accordingly, it is possible to provide a battery in which a current collecting tab protrude toward the side where the lid member is located in the electrode group, and the components to be arranged in the inner cavity of the container and the lid member can be easily assembled with each other.

Although some embodiments of the invention have been described, these embodiments are for purposes of illustration and are not intended to limit the scope of the invention. These novel embodiments may be implemented in various other forms and may be omitted, substituted, or changed in various ways without departing from the gist of the invention. These embodiments and modifications thereof are included in the scope and gist of the invention and are included in the invention disclosed in the claims and the equivalent scope thereof.

## Claims

1. A battery comprising:
a container including a bottom wall and a peripheral wall and defining an inner cavity that is open in a height direction toward a side opposite to a side where the bottom wall is located;
a lid member attached to the peripheral wall of the container in a state in which an opening of the inner cavity is closed;
an electrode group including a positive electrode and a negative electrode and arranged in the inner cavity of the container;
a current collecting tab protruding in the electrode group toward a side where the lid member is located;
an electrode terminal exposed in an outer surface of the lid member;
a lead arranged between the electrode group and the lid member in the inner cavity and electrically connecting the current collecting tab and the electrode terminal to each other; and
a spacer integrally formed of an electrically insulating material, the spacer including a top plate portion sandwiched between the lead and the lid member, and a peripheral plate portion extending from the top plate portion toward a side where the electrode group is located and covering the lead and the current collecting tab in the inner cavity from an outer peripheral side, the peripheral plate portion coming into contact with the electrode group from a side where the lid member is located.

2. The battery according to claim 1, wherein
the peripheral plate portion of the spacer has a through-hole formed through the peripheral plate portion.

3. The battery according to claim 2, wherein
the through-hole penetrates the peripheral plate portion along a depth direction intersecting the height direction, and
the through-hole overlaps the current collecting tab and the lead in a projection from the depth direction.

4. The battery according to claim 2 or 3, wherein
the peripheral plate portion has a first through-hole and a second through-hole formed as the through-hole,
the first through-hole overlaps the second through-hole in a projection from a depth direction intersecting the height direction,
the first through-hole is located on one side in the depth direction with respect to the current collecting tab and the lead, and
the second through-hole is located on a side opposite to the first through-hole in the depth direction with respect to the current collecting tab and the lead.

5. The battery according to any one of claims 2 to 4, further comprising:
a closing member made of an electrically insulating material and attached to the electrode group and the peripheral plate portion of the spacer in a state where the through-hole of the peripheral plate portion is closed.

6. The battery according to any one of claims 1 to 5, wherein
the spacer includes a protrusion protruding in the peripheral plate portion toward a side where the bottom wall is located in the height direction, and
where a depth direction intersecting the height direction and a lateral direction intersecting both the height direction and the depth direction are defined, the protrusion of the spacer is close to the electrode group from outside in the lateral direction.

7. The battery according to claim 6, wherein
the protrusion includes a facing surface facing the electrode group from outside in the lateral direction,
the electrode group includes an electrode group end surface forming an outer end portion of an outer surface in the lateral direction, and
the facing surface of the protrusion is formed to have a shape along the electrode group end surface.

8. The battery according to claim 7, wherein
in the electrode group, the positive electrode and the negative electrode are wound, with a winding axis along the height direction as a center,
the electrode group end surface of the electrode group is formed as a curved surface that is arcuate in a cross section perpendicular to the height direction, and
the facing surface of the protrusion is formed to have a shape along the curved surface of the electrode group end surface of the electrode group.

9. The battery according to any one of claims 6 to 8, wherein
a plural of the electrode group are arranged in the inner cavity,
the plurality of electrode groups includes a first electrode group and a second electrode group arranged adjacent to the first electrode group in the depth direction, and
the protrusion of the spacer includes:
a first protrusion located on a side opposite to the second electrode group in the depth direction with respect to the first electrode group, and being close to the first electrode group from outside in the lateral direction;
a second protrusion located on a side opposite to the first electrode group in the depth direction with respect to the second electrode group, and being close to the second electrode group from outside in the lateral direction; and
a third protrusion located between the first electrode group and the second electrode group in the depth direction, and being close to the first electrode group and the second electrode group from outside in the lateral direction.

10. The battery according to any one of claims 1 to 9, wherein
the electrode terminal includes a positive terminal, and a negative terminal arranged on the outer surface of the lid member at a position away from the positive terminal,
the current collecting tab includes a positive electrode current collecting tab that protrudes in the electrode group toward a side where the lid member is located, and a negative electrode current collecting tab provided away from the positive electrode current collecting tab and protruding in the electrode group toward a side where the positive electrode current collecting tab protrudes, and
the lead includes a positive electrode side lead that electrically connects the positive terminal and the positive electrode current collecting tab to each other, and a negative electrode side lead that electrically connects the negative terminal and the negative electrode current collecting tab to each other.
